Europäisches Patentamt

European Patent Office

Office européen des brevets

(19)

(11) **EP 0 592 693 B1**

(12) **EUROPEAN PATENT SPECIFICATION**

(45) Date of publication and mention
of the grant of the patent:
**16.06.1999 Bulletin 1999/24**

(21) Application number: **93911968.1**

(22) Date of filing: **30.04.1993**

(51) Int Cl.6: **G10K 11/16, F01N 1/00**

(86) International application number:
**PCT/JP93/00589**

(87) International publication number:
**WO 93/22763 (11.11.1993 Gazette 1993/27)**

(54) **NOISE CONTROL DEVICE**

**LÄRMKONTROLLEGERÄT**

**DISPOSITIF ANTIBRUIT**

(84) Designated Contracting States:
**DE FR GB**

(30) Priority: **01.05.1992 JP 11278892**
        **18.05.1992 JP 12497492**
        **19.05.1992 JP 12629492**

(43) Date of publication of application:
**20.04.1994 Bulletin 1994/16**

(60) Divisional application: **97115496.8 / 0 817 165**
        **97115497.6 / 0 817 166**

(73) Proprietor: **FUJITSU TEN, LTD.**
**Kobe-shi, Hyogo, 652 (JP)**

(72) Inventors:
 • **SAKIYAMA, Kazuhiro**
**Akashi-shi Hyogo 674 (JP)**
 • **SAKO, Kazuya**
**Kakogawa-shi Hyogo 675 (JP)**
 • **NAGAMI, Masaaki**
**Akashi-shi, Hyogo 674 (JP)**
 • **BABASAKI, Masahiro**
**Takatsuki-shi Osaka 569 (JP)**

(74) Representative: **Skone James, Robert Edmund**
**GILL JENNINGS & EVERY**
**Broadgate House**
**7 Eldon Street**
**London EC2M 7LH (GB)**

(56) References cited:
**EP-A- 0 479 367          EP-A- 0 481 450**
**EP-A- 0 483 921          WO-A-89/07701**
**FR-A- 2 314 844          JP-A- 50 031 801**
**JP-A- 62 052 349          JP-U- 1 173 406**

Remarks:
Divisional application 97115496.8 filed on 08/09/97.

**Description**

BACKGROUND OF THE INVENTION

1. Field of the Invention

The present invention relates to a noise control device which silences noise by outputting from speakers the signals having a phase opposite to and a sound pressure equal to those of noise emitted from the muffler to an automobile, and more particularly to a device for decreasing space occupied by an actuator thereof, for increasing frequency band of the actuator, and for preventing the noise-decreasing effect from changing in space.

2. Description of the Related Art

Passive silencing devices such as mufflers or the like have heretofore been used for reducing noise produced by internal combustion engines accompanying, however, improvements from the standpoint of sizes, silencing performance, etc. There has, on the other hand, been proposed an active noise control device which cancels noise by outputting from speakers a compensation sound having a phase opposite to and a sound pressure equal to those of noise generated from the source of noise. However, putting the active noise control device into practical use has been belated due to its frequency characteristics or insufficient stability. In recent years, however, signal processing technology using digital circuits has been developed making it possible to treat frequencies over extended ranges. Therefore, many practicable noise control devices have now been proposed (for example, see Japanese Unexamined Patent Publication (Kokai) No. 63-311396).

The above publication discloses an active noise control device of the so-called two-microphone one-speaker type made up of a combination of a feedforward system and a feedback system in which noise is detected by a microphone for noise source that is installed on the upstream side of the duct, a signal having a phase opposite to and a sound pressure equal to those of the noise is formed by a signal processing circuit and is output from a speaker installed on the downstream side of the duct, and the silenced result is detected by a microphone at the silencing point and is fed back.

Another conventional noise control device is shown in document WO-A-89 07701.

Next, described below is an actuator constituted by the speakers and the like.

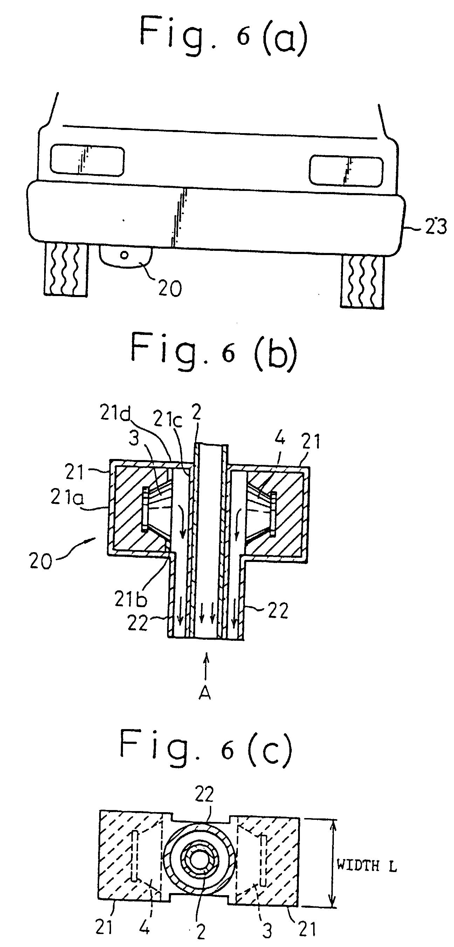

Fig. 6 is a sectional view illustrating the constitution of an actuator 20 in a conventional noise control device. As shown in the diagram (a), a rear portion of an automobile is provided with an actuator 20 of the noise control device near a tail pipe or a terminal pipe through a muffler. The actuator 20 shown in the diagram (b) viewed from the upper direction to the ground comprises two speakers 3 and 4 symmetrically arranged with respect to a tail pipe 2 which emits noise at the terminal pipe of a muffler that silences exhaust noise of an automobile, an enclosure 21 that closes the rear portions of the speakers 3 and 4, and a silencing sound guide portion 22 that guides silencing sound from the front surfaces of the speakers 3 and 4 to the outlet of the tail pipe 2 along therewith. Space formed by the enclosure 21 at the rear portions of the speakers 3 and 4 is depicted by hatched lines. The enclosure 21 comprises a plate 21a surrounding the rear portions of the speakers 3 and 4, a front plate 21b for mounting the opening portions of the speakers 3 and 4, a plate 21c opposed to the front surfaces of the speakers 3 and 4 in order to guide the silencing sound from the front surfaces of the speakers 3 and 4 to the silencing sound guide portion 22, and a side plate 21d. The diagram (c) is a front view of when the opening of the tail pipe 2 is viewed from the direction of arrow A in the diagram (b). As shown in the diagram (c), the enclosure 21 has an oblong shape as viewed from the direction of arrow A. The front surfaces of the speakers 3 and 4 are arranged vertically in relation to the ground.

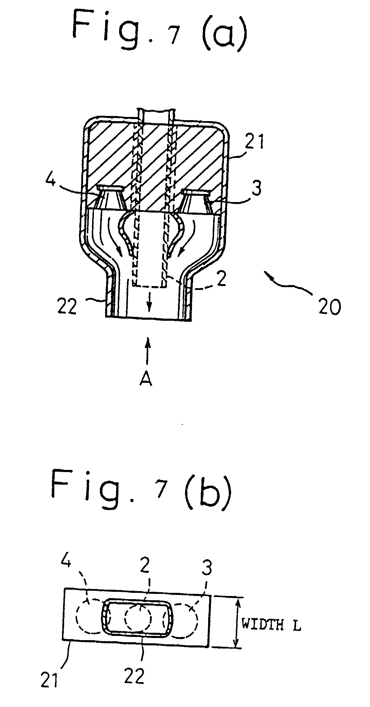

Fig. 7 is a view illustrating the constitution of an actuator 20 in another conventional noise control device. What is different in the diagrams (a), (b) from Fig. 6 is that the front surfaces of the speakers 3 and 4 do not face each other but are directed backward toward the rear of the automobile, that is, in the same direction as the front surface of the tail pipe. What is common in Fig. 7 with Fig. 6 is that the front surfaces of the speakers 3 and 4 are arranged vertically in relation to the ground.

In the actuator 20 for the conventional noise control device, the diameter of the speakers 3 and 4 must be increased and the volume of space defined by the enclosure 21 must be increased in order to decrease noise of low frequencies (50 Hz to 300 Hz). That is, as shown in Fig. 6 or Fig. 7 in order to hold speakers 3 and 4 for producing bass sound, the enclosure 21 must have a width which is at least as wide as the diameter of the openings of the speakers 3 and 4. In practice, however, the actuator 20 must be installed near the outlet of the tail pipe 2 where space is narrow. If the enclosure 21 is too great in width, a fist problem arises in that the enclosure 21 is possibly in contact with the ground due to vibration when the automobile is moving.

In view of the above-mentioned problem, therefore an object of the present invention is to provide an actuator of a noise control device in which the width L of the enclosure 21 can be reduced.

Next, since the enclosure 21 does not have a great volume, a second problem arises in that the control of noise cannot be improved due to the large amount of bass vibration of the speakers, so that frequency band of the speakers becomes narrow.

In view of the above-mentioned problems, therefore another object of the present invention is to provide an actuator of a noise control device which can substantially make the volume thereof great.

Further, the silenced result as described above is detected by a microphone (sensor) to be used for feedback. In this case, the microphone should be positioned near the speaker to obtain a good effect, but since this silenced result is distributed in space, a third problem arises in that positioning a microphone only near the speaker is not sufficient to avoid disparity of the cancelled effect in space.

In view of the above-mentioned problems, therefore another object of the present invention is to provide an actuating means of a noise control device which can avoid disparity of the cancelled effect in space.

SUMMARY OF THE INVENTION

In order to solve the above-mentioned problems, the present invention provides a noise control device for silencing noise emitted from a tail pipe of an automobile, the noise control device being disposed at the outlet of the tail pipe of a muffler and being configured so as to emit noise that silences exhaust noise of the automobile, the noise control device comprising:

a speaker which is arranged near and along one side of the tail pipe and of which the front surface is offset by a constant angle from a plane defined vertically with respect to the ground, to output silencing sound having a phase opposite to and a sound pressure equal to noise sound emitted from the tail pipe; an enclosure which closes the rear portion of said speaker; and a silencing sound guide portion which guides silencing sound emitted from the front surface of the speaker (3) to the outlet of the tail pipe.

Further, a pair of speakers may be symmetrically arranged along each side with respect to the tail pipe, the open surfaces of the speakers having a constant angle with respect to a vertical plane. Also, both of the open surfaces of the speakers may be directed up or down with respect to the ground. One of the open surfaces of the speakers may also be directed up with respect to the ground while the other of the open surfaces of the speakers is directed down with respect to the ground. Further, the open surfaces of the speakers may face each other to have the same angle with respect to a vertical plane. Also, the open surfaces of the speakers may be in parallel with each other and the center lines of the open surfaces may be shifted relative to each other. According to the noise control device of the present invention, the width L of the enclosure can be small, and even if the diameter of the opening portion of the speaker becomes great, a constant distance between the ground and the speaker can be maintained.

BRIEF DESCRIPTION OF THE DRAWINGS

Fig. 1 is a diagram illustrating the constitution of a noise control device which is a prerequisite of an ( embodiment of the present invention;
Fig. 2 is a diagram illustrating the constitution of an actuator 20 of the noise control device according to a first embodiment of the present invention, in which front-surfaces of speakers are horizontal to the ground and are directed in an upper direction;
Fig. 3 is a diagram illustrating a first modified constitution of the actuator for the noise control device according to the first embodiment of the present invention, in which front surfaces of speakers are directed in opposite directions;
Fig. 4 is a diagram illustrating a second modified constitution of the actuator for the noise control device according to the first embodiment of the present invention, in which front surfaces of speakers face each other at a constant angle in relation to the ground;
Fig. 5 is a diagram illustrating a third modified constitution of the actuator for the noise control device according to the first embodiment of the present invention, in which front surfaces of speakers face each other at a constant angle in relation to the ground and in parallel with each other;
Fig. 6 is a diagram illustrating the constitution of an actuator 20 in a conventional noise control device;
Fig. 7 is a diagram illustrating the constitution of another actuator 20 in a conventional noise control device.

DETAILED DESCRIPTION OF THE PREFERRED EMBODIMENTS

Embodiments of the present invention will now be described with reference to the drawings.

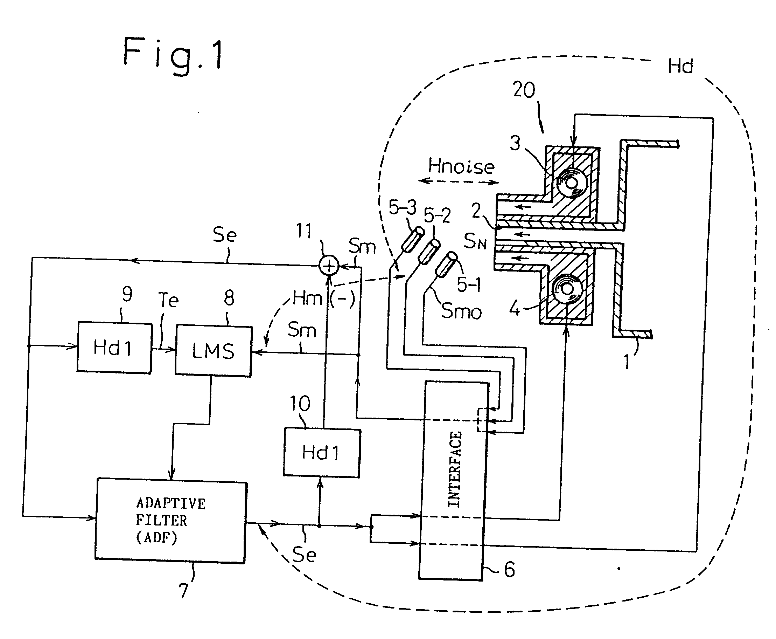

Fig. 1 is a diagram illustrating the constitution of a noise control device which is a prerequisite of an embodiment of the present invention. The noise control device diagramed here is constituted by two speakers 3 and 4 for silencing noise emitted from a tail pipe 2 that is the terminal pipe of a muffler 1 that silences exhaust noise of an automobile, three microphones 5-1, 5-2 and 5-3 which are arranged as will be described later to trap, as an error signal, residual noise consisting of noise from the tail pipe 2 and silencing sound which is emitted from the speakers 3 and 4 and has a phase opposite to and a sound pressure equal to those of the noise, an interface 6 which converts a signal to the speakers 3 and 4 into an analog signal from the digital form and amplifies it, converts analog signals of the microphones 5-1, 5-2 and 5-3 into digital signals and amplifies them, and adaptive filter 7 of FIR (finite impulse response) which inputs a reproduced noise signal that will be described later as to-be-controlled signal and forms a compensation sound that silences noise via the interface 6, a coefficient updating means 8 which inputs a synthesized signal of error signals from the microphones 5-1, 5-2 and 5-3 and updates the filter coefficient of FIR of the adaptive filter 7, a first transfer characteristics simulating means 9 which inputs said reproduced noise signal and simulates transfer characteristics of from the output of the adaptive filter 7 through the interface 6, speakers 3 and 4, microphones 5-1, 5-2 and 5-3 up to the coefficient updating means 8 in order to provide the filter coefficient of the coefficient updating means 8, a second transfer characteristics simulation means 10 which inputs a compensation signal from the adaptive filter 7 and has the same transfer characteristics as the above first transfer characteristics simulation means 9, and a differential signal calculation means 11 which calculates a differential signal between an output signal of the second transfer characteristics simulation means 10 and a synthesized signal of output signals of the microphones 5-1, 5-2 and 5-3, and sends the differential signal as a reproduced noise signal to the adaptive filter 7 and to the first transfer characteristics simulation means 9. Here, the adaptive filter 7, coefficient updating means 8, first transfer characteristics simulation means 9, second transfer characteristics simulation means 10 and differential signal calculation means 11 are constituted by digital signal processing units (DSP).

Described below is a series of operations of the noise control device. Here, transfer characteristics of from the output of the adaptive filter 7 to the microphone 5-1, 5-2, 5-3 are denoted by Hd, average transfer characteristics of from the microphones 5 to the filter coefficient updating means 8 are denoted by Hm, and average transfer characteristics of from the tail pipe 2 which is the source of noise to the microphones 5 are denoted by Hnoise. Moreover, a noise signal from the tail pipe 2 is denoted by Sn, an output signal from the microphones 5 is denoted by Sm0, a compensation signal from the adaptive filter 7 is denoted by Sc, an input signal to the coefficient updating means 8 is denoted by Sm and a differential signal from an output signal of the differential signal calculation means 11 is denoted by Se. The differential signal will be used later as a reproduced noise signal to be input into the adaptive filter.

Then, the transfer characteristics Tdl simulated by the first transfer characteristics simulation means 9 and the second transfer characteristics simulation means 10 are given as,

$$Hdl = Hd \bullet Hm \qquad (1)$$

and a signal Sm0 detected by the microphone 5 becomes as follows:

$$Sm0 = Sn \bullet Hnoise + Sc \bullet Hd \qquad (2)$$

From the above-mentioned constitution and the above formulas (1) and (2), the differential signal Se which is a reproduced noise signal input to the adaptive filter 7 and is calculated by the differential signal calculation means 11, is obtained as follows:

$$Se = Sm0 \bullet Hm - Sc \bullet Hdl$$

$$= (Sn \bullet Hnoise + Sc \bullet Hd) \bullet Hm - Sc \bullet Hd \bullet Hm$$

$$= (Sn \bullet Hnoise + Sc \bullet Hd - Sc \bullet Hd) \bullet Hm$$

$$= Sn \bullet Hnoise \bullet Hm \qquad (3)$$

The input signal Sm to the coefficient updating means 8 is given as,

$$Sm = Sm0 \bullet Hm \qquad (4)$$

The other input signal Te is obtained by the first transfer characteristics simulation means 9 considering the transfer characteristics Tdl in relation to the reproduced noise signal Se. In the adaptive filter 7, the filter coefficient is changed by the coefficient updating means 8, so that the input signal Sm becomes zero. Therefore, under the condition where Sm = 0, i.e., Sm0 = 0, the compensation signal Sc output from the adaptive filter 7 is given from the above equation (2) as follows:

$$Sc \doteqdot -Sn \bullet Hnoise/Hd \qquad (5)$$

The coefficient updating means 8 finds a filter coefficient (Ck(n);K: number of stages) of FIR of the adaptive filter 7 by the method of least squares in compliance with the following equation, in

$$Ck(n) = Ck(n - 1) + (Sm(n) \bullet \alpha/q(n + k - 1) \qquad (6)$$

where $\alpha$ is a coefficient of convergence, Sm(n) is a synthesized signal of the microphones 5-1, 5-2 and 5-3, q (n + k - 1) is a normalizing signal from the first transfer characteristics simulation means 9, and n is an ordinal number of a digital signal.

In the foregoing was described the noise control device in which a signal of silencing sound for silencing noise is formed by the speakers 3 and 4. Now, described below is an actuator 20 constituted by the speakers 3, 4 and the like.

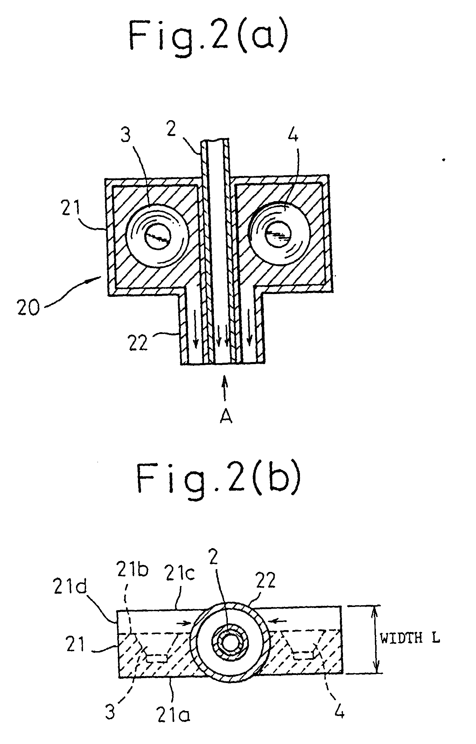

Fig. 2 is a diagram illustrating the constitution of an actuator for the noise control device according to a first embodiment of the present invention, in which front faces of speakers are horizontal to the ground and directed in the upper direction. The actuator 20 shown in the diagram (a) comprises two speakers 3 and 4 symmetrically arranged with respect to the tail pipe 2 in a manner that their open surfaces (front surfaces) directed in the upper direction away from the ground respectively, an enclosure 21 that closes the rear portions of the speakers 3 and 4, and a silencing sound guide portion 22 that guides silencing sound from the front surfaces of the speakers 3 and 4 to the outlet of the tail pipe 2 along therewith. Space formed by the enclosure 21 at the rear portions of the speakers 3 and 4 is depicted by hatched lines. The enclosure 21 comprises as shown in the diagram (b) a plate 21a surrounding the rear portions of the speakers 3 and 4, a front plate 21b for mounting the opening portions of the speakers 3 and 4, a plate 21c opposed to the front surfaces of the speakers 3 and 4 in order to guide the silencing sound from the front surfaces of the speakers 3 and 4 to the silencing sound guide portion 22, and a side plate 21d. The diagram (b) is a front view of when the opening of the tail pipe 2 or of the silencing sound guide portion 22 is viewed from the direction of arrow A. As shown in this diagram, if the diameter of the opening portions of the speakers 3 and 4 becomes great, it is not necessary to make the width L of the enclosure 21 great. Therefore, according to the present embodiment, without increasing the width L of the enclosure 21, the speakers 3 and 4 may reduce low frequency noise caused by the great vibration thereof. Additionally, even if front surfaces of the speakers 3 and 4 are directed forward the ground, the same function and effect is obtained.

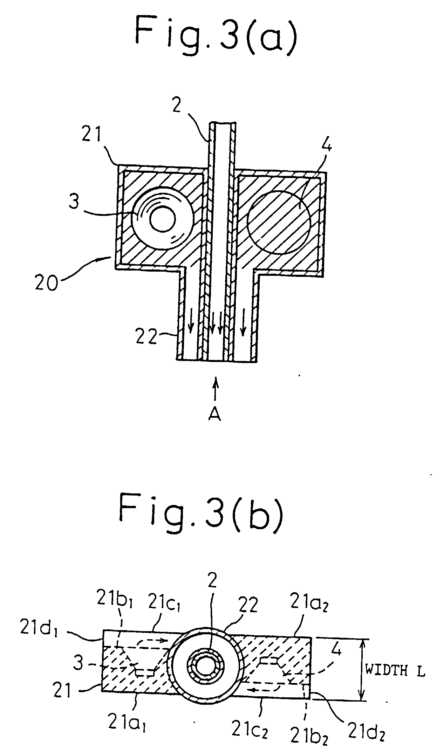

Fig. 3 is a diagram illustrating a first modified constitution of the actuator for the noise control device according to the first embodiment of the present invention, in which front surfaces of the speakers are directed in opposite directions. What makes the actuator 20 shown in the diagram (a) different from that of Fig. 2 is that the open surfaces of the speakers 3 and 4 are faced opposite relative to each other. The enclosure 21 shown in the diagram (b) comprises a plate 21al surrounding the rear portion of the speaker 3, a front plate 21bl for mounting the opening portion of the speaker 3, a plate 21cl opposed to the front surface of the speaker 3 in order to guide the silencing sound from the front surface of the speaker 3 to the silencing sound guide portion 22, and a side plate 21bl, and further comprises a plate 21a2 surrounding the rear portion of the speaker 4, a front plate 21d2 for mounting the opening portion of the speaker 4, a plate 21c2 opposed to the front surface of the speaker 4 in order to guide the silencing sound from the front surface of the speaker 4 to the silencing sound guide portion 22, and a side plate 21d2. Also, in this way, even if the diameter of the opening portions of the speakers 3 and 4 becomes great like those of Fig. 2, it is not necessary to make the width L of the enclosure 21 great.

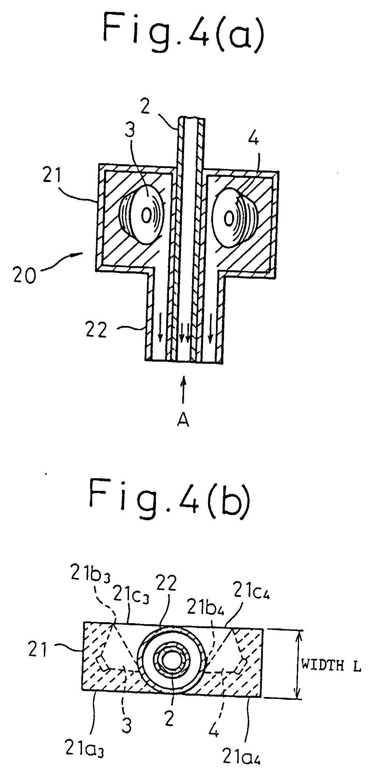

Fig. 4 is a diagram illustrating a second modified constitution of the actuator for the noise control device according to the first embodiment of the present invention, in which front surfaces of speakers face each other at a constant angle in relation to the ground. What makes the actuator of the diagram (a) different from that of the first modification is that the two speakers 3 and 4 are so arranged in the enclosure 21 that the open surfaces of the speakers 3 and 4 face the tail pipe 2 maintaining a predetermined angle relative to each other, i. e., that the open surfaces are arranged in a V-shape. The enclosure 21 shown in the diagram (b) comprises a plate 21a3 that surrounds the rear portion of the speaker 3, a front plate 21b3 for mounting the opening portion of the speaker 3, a plate 21c3 opposed to the front surface of the speaker 3 to guide the silencing sound from the front surface of the speaker 3 to the silencing sound guide portion 22, and a side plate 21b3 (not shown) and further comprises a plate 21a4 that surrounds the rear portion of the speaker 4, a front plate 21b4 for mounting the opening portion of the speaker 4, a plate 21c4 opposed to the front surface of the speaker 4 to guide the silencing sound from the front surface of the speaker 4 to the silencing sound guide portion 22, and a side plate 21b4 (not shown). According to this modification in which the open surfaces of the speakers 3 and 4 define a predetermined angle relative to each other, the diameter of the openings of the speakers 3 and 4 can be substantially decreased with respect to the enclosure 21, and the width of the enclosure 21 holding the speakers 3 and 4 can be decreased.

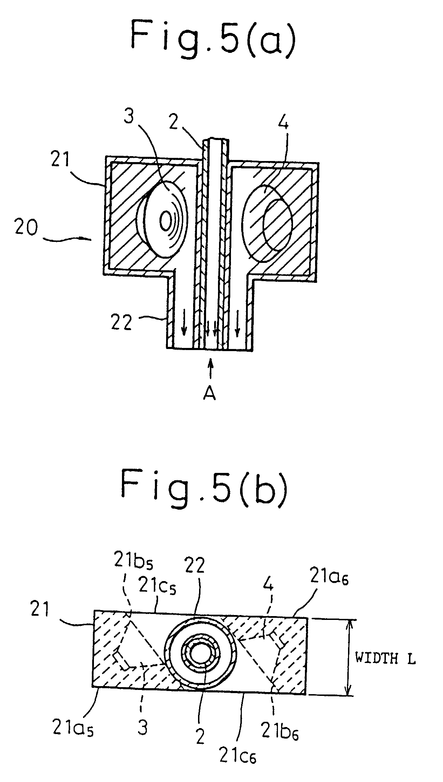

Fig. 5 is a diagram illustrating a third modified constitution of the actuator for the noise control device according to the first embodiment of the present invention, in which the front surfaces of the speakers face each other at a constant angle in relation to ground and are in parallel with each other. What makes the actuator 20 shown in the diagram (a) different from that of the second modification is that the two speakers 3 and 4 are arranged in the enclosure 21 in a manner that their center lines are deviated from each other and that their open surfaces are opposed to each other. The actuator 20 shown in the diagram (b) comprises a plate 21a5 surrounding the rear portion of the speaker 3, a front plate 21b5 for mounting the opening portion of the speaker 3, a plate 21c5 opposed to the front surface of the speaker 3 to guide the silencing sound from the front surface of the speaker 3 to the silencing sound guide portion 22, and a side plate 21b5 (not shown) and further comprises a plate 21a6 surrounding the rear portion of the speaker 4, a front plate 21b6 for mounting the opening portion of the speaker 4, a plate 21c6 opposed to the front surface of the speaker 4 to guide the silencing sound from the front surface of the speaker 4 to the silencing sound guide portion 22, and a side plate 21b6 (not shown). This arrangement, too, makes it possible to decrease the width of the enclosure 21 like that of Fig. 4.

The aforementioned constitution makes it possible to realize the body of the actuator 20 in a reduced thickness, i.e., to increase the diameter of the open surfaces of the speakers to reproduce low frequencies without producing any adverse effect. That is, an increased degree of freedom is maintained in combining with mufflers and the like, and the enclosure 21 maintains its volume and the low frequency-reproducing ability.

Although in the foregoing the case where two speakers exist was described, the same function and effect is obtained even if the only one speaker exists.

[Industrial Applicability]

The speakers of the noise control device according to the present invention can be used for controlling noise discharged with the exhaust gas of various automobiles and are suitable to reduce the volume of a speaker, to make the frequency band thereof broad and prevent the noise-decreasing effect from changing in space.

## Claims

1. A noise control device for silencing noise emitted from a tail pipe (2) of an automobile, the noise control device being disposed at the outlet of the tail pipe (2) of a muffler (1) and being configured so as to emit noise that silences exhaust noise of the automobile, the noise control device comprising:

   a speaker (3) which is arranged near and along one side of the tail pipe (2) and of which the front surface is offset by a constant angle from a plane defined vertically with respect to the ground, to output silencing sound having a phase opposite to and a sound pressure equal to noise sound emitted from the tail pipe (2); an enclosure (21) which closes the rear portion of said speaker (3); and
   a silencing sound guide portion (22) which guides silencing sound emitted from the front surface of the speaker (3) to the outlet of the tail pipe (2).

2. The noise control device of claim 1, characterized by arranging a pair of speakers (3,4) symmetrically along each side with respect to the tail pipe (2), the open surfaces of the speakers (3,4) having a constant angle with respect to a vertical plane.

3. The noise control device of claim 2, characterized by directing both of the open surfaces of said speakers (3,4) in an upward direction or a downward direction with respect to the ground.

4. The noise control device of claim 2, characterized by directing one of the open surfaces of said speakers (3,4) in an upward direction with respect to the ground and the other of the open surfaces of said speakers (3,4) in a downward direction with respect to ground.

5. The noise control device of claim 2, characterized by facing the open surfaces of the speakers (3,4) to have the same angle with respect to a vertical plane.

6. The noise control device of claim 5, characterized by being in parallel with the open surfaces of the speakers (3, 4) with each other and shifting the center lines of said open surfaces relative to each other.

## Patentansprüche

1. Lärmkontrollgerät zur Dämpfung von Lärm, der aus einem Abgasendrohr (2) eines Automobils austritt, wobei das Lärmkontrollgerät am Auslaß des Abgasendrohres (2) eines Abgas-Schalldämpfers (1) angeordnet und so zusammengesetzt ist, daß es ein Geräusch erzeugt, welches das Auspuffgeräusch des Automobils dämpft, wobei das Lärmkontrollgerät umfaßt:

   einen Lautsprecher (3), der in der Nähe und entlang einer Seite des Abgasendrohres (2) angeordnet ist und dessen Vorderfläche um einen gleichbleibenden Winkel von einer Ebene verschoben ist, die senkrecht im Hinblick auf den Boden definiert ist, um ein Dämpfungsgeräusch mit einer Phase zu erzeugen, welche dem Lärmgeräusch, das aus dem Abgasendrohr (2) austritt, entgegengesetzt ist, und welches einen Schalldruck aufweist, der dem Schalldruck des aus dem Abgasendrohr (2) austretenden Lärmgeräusches entspricht; ein Gehäuse (21), welches den hinteren Abschnitt des Lautsprechers (3) umgibt; und

   einen Dämpfungsgeräuschführungsabschnitt (22), der das Dämpfungsgeräusch, das aus der vorderen Oberfläche des Lautsprechers (3) austritt, zum Auslaß des Abgasendrohres (2) führt.

2. Lärmkontrollgerät nach Anspruch 1, dadurch gekennzeichnet, daß ein Paar Lautsprecher (3, 4) symmetrisch entlang jeder Seite im Hinblick auf das Abgasendrohr (2) angeordnet ist, wobei die offenen Oberflächen der Lautsprecher (3, 4) einen konstanten Winkel im Hinblick auf eine vertikale Ebene besitzen.

3. Lärmkontrollgerät nach Anspruch 2, dadurch gekennzeichnet, daß beide offenen Oberflächen der Lautsprecher (3, 4) in eine nach oben gerichtete Richtung oder eine nach unten gerichtete Richtung im Hinblick auf den Boden gerichtet sind.

**4.** Lärmkontrollgerät nach Anspruch 2, dadurch gekennzeichnet, daß eine der offenen Oberflächen der Lautsprecher (3, 4) in eine nach oben gerichtete Richtung im Hinblick auf den Boden gerichtet ist und die andere der offenen Oberflächen der Lautsprecher (3, 4) in eine nach unten gerichtete Richtung im Hinblick auf den Boden gerichtet ist.

**5.** Lärmkontrollgerät nach Anspruch 2, dadurch gekennzeichnet, daß die offenen Oberflächen der Lautsprecher (3, 4) zueinander gerichtet sind, so daß sie denselben Winkel im Hinblick auf eine senkrechte Ebene aufweisen.

**6.** Lärmkontrollgerät nach Anspruch 5, dadurch gekennzeichnet, daß die offenen Oberflächen der Lautsprecher (3, 4) parallel zueinander sind und die Mittellinien der offenen Oberflächen relativ zueinander verschoben sind.

**Revendications**

**1.** Dispositif de contrôle de bruit permettant d'atténuer le bruit émis par un tuyau d'échappement (2) d'une automobile, le dispositif de contrôle de bruit étant disposé à la sortie du tuyau d'échappement (2) d'un silencieux (1) et étant configuré de manière à émettre un son qui atténue le bruit d'échappement de l'automobile, le dispositif de contrôle de bruit comprenant :

une enceinte acoustique (3) qui est disposée près et le long de l'un des côtés du tuyau d'échappement (2) et dont la surface avant est décalée par un angle constant d'un plan défini verticalement par rapport au sol, afin d'émettre un son atténuant, en opposition de phase par rapport au bruit émis par le tuyau d'échappement (2), et de pression sonore égale ; une enveloppe (21) qui ferme la partie arrière de l'enceinte acoustique (3) ; et

une partie guide (22) du son atténuant guidant le son atténuant émis depuis la surface avant de l'enceinte acoustique (3) vers la sortie du tuyau d'échappement (2).

**2.** Dispositif de contrôle de bruit selon la revendication 1, caractérisé en ce qu'il comprend une paire d'enceintes acoustiques (3, 4) disposées symétriquement le long de chaque côté du tuyau d'échappement (2), les surfaces ouvertes des enceintes (3, 4) formant un angle constant par rapport à un plan vertical.

**3.** Dispositif de contrôle de bruit selon la revendication 2, caractérisé en ce que les deux surfaces ouvertes des enceintes acoustiques (3, 4) vers le haut ou vers le bas par rapport au sol.

**4.** Dispositif de contrôle de bruit selon la revendication 2, caractérisé en ce que l'une des surfaces ouvertes des enceintes acoustiques (3, 4)est dirigée vers le haut par rapport au sol et l'autre des surfaces ouvertes des enceintes acoustiques (3, 4) vers le bas par rapport au sol.

**5.** Dispositif de contrôle de bruit selon la revendication 2, caractérisé en ce que les surfaces ouvertes des enceintes acoustiques (3, 4)se font face afin d'avoir le même angle par rapport à un plan vertical.

**6.** Dispositif de contrôle de bruit selon la revendication 5, caractérisé en ce que les surfaces ouvertes des enceintes acoustiques (3, 4) sont parallèles entre elles, les lignes centrales desdites surfaces ouvertes étant décalées l'une par rapport à l'autre.

# Fig.1

# Fig.2(a)

# Fig.2(b)

# Fig.3(a)

# Fig.3(b)

# Fig.4(a)

# Fig.4(b)

# Fig.5(a)

# Fig.5(b)

WIDTH L

# Fig. 6 (a)

23

20

# Fig. 6 (b)

21d  21c  2

3        4  21

21

21a

20

21b

22        22

22

↑
A

# Fig. 6 (c)

22

WIDTH L

21  4  2  3  21

# Fig. 7 (a)

# Fig. 7 (b)

WIDTH L